Europäisches Patentamt

European Patent Office

Office européen des brevets

(11) Numéro de publication : **0 517 631 A1**

# (12) DEMANDE DE BREVET EUROPEEN

(21) Numéro de dépôt : **92420192.4**

(22) Date de dépôt : **05.06.92**

(51) Int. Cl.⁵ : **F16K 7/16**

(30) Priorité : **07.06.91 FR 9107191**
**07.06.91 FR 9107192**

(43) Date de publication de la demande :
**09.12.92 Bulletin 92/50**

(84) Etats contractants désignés :
**AT BE CH DE DK ES FR GB GR IT LI LU MC NL PT SE**

(71) Demandeur : **TRANSFLUID SA**
**CH-2024 Saint-Aubin (CH)**

(72) Inventeur : **Beauvir, Jacques**
**Rue Foulaz 23**
**CH-20215 Chez-le-Bart (CH)**

(74) Mandataire : **Maureau, Philippe et al**
**Cabinet GERMAIN & MAUREAU BP 3011**
**F-69392 Lyon Cédex 03 (FR)**

(54) **Vanne à membrane métallique.**

(57) Vanne à membrane métallique se présentant sous la forme d'un disque. Cette membrane comporte, à partir de sa périphérie, une collerette plane (20) destinée à prendre appui sur l'embase avec étanchéité, raccordée à la partie centrale (25) sur laquelle est destiné à agir un dispositif d'actionnement par plusieurs surfaces annulaires (22, 23, 24) étagées depuis le plan d'appui sur l'embase vers l'extérieur, ces surfaces annulaires étant successivement inclinées de l'extérieur vers le centre de la membrane, et de l'embase vers le dispositif d'actionnement (22, 24), et parallèles au plan d'appui de la membrane sur l'embase (23, 25), lorsqu'aucune action n'est exercée sur la membrane.

Application à la réalisation de vannes à haute étanchéité pour fluides très purs.

FIG.2

EP 0 517 631 A1

La présente invention a pour objet une vanne à membrane métallique.

De façon connue, une vanne à membrane comprend un corps dans lequel sont ménagés des conduits d'amenée et d'évacuation du fluide, le conduit d'amenée débouchant dans une face en regard de laquelle est montée la membrane, qui, par déformation, est susceptible d'isoler ou de mettre en communication les conduits d'amenée et d'évacuation de fluide, en obturant ou non l'extrémité du conduit d'amenée du fluide qui forme un siège pour la membrane.

Il est intéressant d'utiliser des vannes à membrane lorsque l'on recherche d'excellentes qualités d'étanchéité, une absence de pollution du fluide véhiculé, notamment en limitant au maximum les microparticules susceptibles de se détacher des éléments constitutifs de la vanne, et lorsque l'on cherche à réduire au maximum les zones d'interstice qui sont incompatibles avec l'utilisation de fluide pur, compte tenu des cavités de faible volume que délimitent ces zones, où les particules peuvent s'accumuler, et d'où elles peuvent se détacher à tout moment. En outre, dans ces zones d'interstice peuvent demeurer des quantités mêmes faibles de fluide résiduel qui ne peuvent être éliminées par rinçage. Dans la mesure où les fluides possèdent des propriétés chimiques agressives, ces zones de rétention augmentent les risques de corrosion.

Une vanne à membrane présente, par rapport à une vanne à soufflet, l'avantage de limiter les zones d'interstice, et d'éviter les pertes de micro-particules de matière. Encore faut-il que la membrane ne soit pas associée à un élément d'actionnement, tel qu'un ressort, qui est disposé dans la veine fluide, et qui risque lui aussi de libérer des particules dommageables.

Une première solution consiste à utiliser une membrane plane. Un tel type de membrane ne donne pas entièrement satisfaction du fait que la course entre la position fermée et la position ouverte de la vanne est faible, de telle sorte que le coefficient de débit est également limité. En outre, il se produit, dans la zone périphérique de fixation de la membrane sur l'embase de la vanne, un fluage de la matière, ce qui se traduit par des fuites au niveau de la fixation.

Une solution qui semblerait à priori intéressante consiste à utiliser une membrane ondulée qui permette d'augmenter la flexibilité ainsi que la course de la membrane. Il n'en est rien car l'expérience montre que les ondulations de la membrane se traduisent par une rigidification de celle-ci, ainsi que par le ménagement de volume mort à l'intérieur des ondulations, qui sont autant de zones de rétention du fluide.

Le but de l'invention est de fournir une membrane métallique pour vanne à membrane, qui assure une fermeture dans d'excellentes conditions d'étanchéité, notamment satisfaisant à un test d'étanchéité à l'hélium de $2.10^{-9}$ cm³/seconde, qui soit actionnée uniquement en position de fermeture par un dispositif d'actionnement, et qui passe en position d'ouverture par elle-même compte tenu de sa forme, dès que le dispositif d'actionnement cesse d'agir, en offrant un coefficient de débit très important. Cette membrane doit résister à la corrosion vis-à-vis des fluides agressifs du type de ceux utilisés en micro-électronique, posséder une durée de vie importante, réduire au maximum les zones d'interstice, ainsi que les volumes morts, et être susceptible d'être fixée sur l'embase de la vanne, soit mécaniquement, soit par soudage.

A cet effet, la membrane métallique que concerne l'invention, se présentant sous la forme d'un disque, comporte, à partir de sa périphérie, une collerette plane destinée à prendre appui sur l'embase avec étanchéité, raccordée à la partie centrale sur laquelle est destiné à agir un dispositif d'actionnement, par plusieurs surfaces annulaires étagées depuis le plan d'appui de la membrane sur l'embase vers l'extérieur, ces surfaces annulaires étant successivement inclinées de la périphérie de la membrane vers le centre de celle-ci, et de l'embase vers le dispositif d'actionnement, et parallèles au plan d'appui de la membrane sur l'embase, lorsqu'aucune action n'est exercée sur la membrane.

Cette membrane réalisée en un alliage rendant le matériau parfaitement inoxydable, possède un module d'élasticité très faible. Toutefois, la structure de cette membrane permet une excellente fixation de celle-ci au niveau de la collerette extérieure, et une déformation importante sous l'effet d'une faible contrainte, grâce à la structure étagée, permettant, en position ouverte de la vanne, d'obtenir un coefficient de débit élevé.

Il est à noter que les contraintes métalliques dues à la déformation de la membrane ne sont pas transmises à la collerette extérieure de fixation sur l'embase de la vanne, en raison de la rigidité obtenue au niveau de cette collerette, grâce à la partie inclinée qui en est adjacente, et qui forme un bras de levier. Le point d'appui de la membrane est reporté sur le bord supérieur de cette partie inclinée qui agit comme un arc-boutant et permet, au cours de la fermeture de la membrane, de réaliser une légère flexion assurant la déformation de toute la zone située à l'intérieur par rapport à ce bord, ainsi que son rappel en position haute lorsque cesse l'action exercée par le dispositif d'actionnement.

Avantageusement, au repos et avant montage sur l'embase, la collerette extérieure forme un angle relevé de quelques degrés par rapport au plan d'appui sur l'embase.

Dans ces conditions, lors du serrage de la membrane au niveau de sa collerette extérieure, le bord délimitant la collerette et la zone inclinée vient en appui sur la face plane de l'embase, et la pression exercée au niveau de ce bord limite les interstices constitutifs de zones de rétention de fluide. Par ailleurs, les contraintes mécaniques de la collerette ainsi ramenées à l'horizontal augmentent l'efficacité du bras de levier de la zone inclinée adjacente.

La dynamique obtenue par cet agencement est d'environ six fois celle d'une membrane plane correspondante. La souplesse étant grandement accrue, assure d'excellentes conditions d'étanchéité.

Selon une caractéristique de l'invention, la collerette extérieure est prolongée du côté de l'intérieur par une surface tronconique elle-même prolongée par une surface parallèle au plan d'appui sur l'embase, lorsque la membrane est au repos.

Dans la mesure où la fixation de la membrane est réalisée mécaniquement, cette surface annulaire parallèle au plan d'appui de l'embase, est en contact, en position ouverte de la membrane, avec la face correspondante d'une rondelle de serrage.

Selon une forme d'exécution, la surface parallèle au plan d'appui sur l'embase est prolongée par une zone inclinée du côté du dispositif d'actionnement, elle-même raccordée à la partie centrale de la membrane.

Avantageusement, la zone inclinée reliant la partie centrale à la surface parallèle au plan d'appui de l'embase est cintrée et possède sa surface concave tournée du côté de l'extérieur de la membrane.

Cette dernière disposition permet de réaliser une flexion de la membrane sur toute la zone comprise entre la première surface inclinée reliée directement à la collerette extérieure, et la partie centrale formant obturateur proprement dit, et actionnée par le piston du dispositif d'actionnement. Compte tenu de la souplesse de l'ensemble, et de la désolidarisation du piston et de la face extérieure de la membrane, celle-ci joue librement, ce qui augmente considérablement sa durée de vie. Il est à noter que la rondelle évoquée précédemment, contre laquelle prend appui la membrane en position d'ouverture de la vanne, permet le maintien en forme de cette membrane, même si la pression du fluide est trés élevée, ce qui concourt à l'amélioration de l'étanchéité, d'une part, et à l'augmentation de la durée de vie de la membrane, d'autre part, en évitant que celle-ci subisse des déformations excessives. La fiabilité de l'ensemble de la vanne se trouve ainsi renforcée.

Conformément à une autre caractéristique de l'invention, cette membrane comporte, en son centre, une excroissance de faible diamètre par rapport au diamètre de la partie centrale qui est lui-même supérieur au diamètre du siège ménagé à l'extrémité du conduit à obturer, résultant d'une déformation de la membrane vers l'extérieur, tandis que le piston du dispositif d'actionnement comporte un évidement complémentaire, destiné à recevoir cette excroissance, lorsque le piston est en contact avec la membrane.

Cette excroissance rigidifie la partie centrale, ce qui favorise le bon contact de celle-ci avec le siège ménagé sur l'embase. En outre, cette rigidification est importante compte tenu du fait que c'est cette partie centrale qui reçoit la pression du dispositif d'actionnement. Enfin, l'évidement, tourné sur la face intérieure de la membrane, correspondant à l'excroissance faisant saillie de la face extérieure de celle-ci, contribue également à améliorer le coefficient de débit de la vanne.

Avantageusement, et afin d'améliorer les performances d'étanchéité de la membrane, le piston de l'actionneur, de diamètre supérieur à celui du siège vis-à-vis duquel l'étanchéité doit être réalisée, comporte dans un plan parallèle à celui contenant sa face d'appui sur la membrane, une gorge périphérique délimitant au centre une épaisseur de matière de diamètre inférieur à celui du siège de l'embase de la vanne vis-à-vis duquel l'étanchéité doit être réalisée.

Cet agencement confère au système une certaine souplesse lors de l'application de la membrane sur le siège par l'intermédiaire du piston. Il est ainsi possible de compenser de légères irrégularités de planéité ou de géométrie, car la membrane a ainsi tendance à fluer vers l'intérieur de l'orifice d'obturation. Cet agencement permet de fournir une excellente étanchéité, tout en mettant en oeuvre un piston réalisé en un matériau rigide. Il est à noter que la mise en oeuvre d'un matériau trop souple pour réaliser le piston, d'une part, ne permet pas d'aboutir à une bonne étanchéité et, d'autre part, déforme de façon irréversible et dommageable la membrane.

Un autre but de l'invention est de fournir une embase pour vanne dont l'obturateur est constitué par une membrane métallique, qui possède une excellente étanchéité, et notamment qui puisse subir un test d'étanchéité à l'hélium de $2.10^{-9}$ cm³/seconde, qui possède un coefficient de débit au moins aussi important qu'une vanne de même type utilisant un soufflet, qui possède une haute résistance à la corrosion envers des fluides agressifs du type de ceux utilisés en micro-électronique, dont la durée de vie soit importante, dont le volume mort soit aussi réduit que possible, dont la rugosité du circuit de fluide soit faible, voisin ou inférieur à 0,10 microns, et qui possède une excellente sécurité mécanique à la pression.

Un but de l'invention est également de fournir une embase de vanne réagissant à une pression de fermeture faible pour un encombrement minimum, dans laquelle les zones d'interstice soient réduites au maximum, permettant un montage de membrane par serrage, en vue d'une éventuelle interchangeabilité, ou par soudure intégrale, permettant une interchangeabilité des actionneurs de la membrane, ceux-ci pouvant être manuels, pneumatiques ou hydrauliques, et enfin se présentant sous un encombrement réduit.

A cet effet, dans la vanne qu'elle concerne, l'embase, du type comportant un corps dans lequel sont ménagés des conduits d'amenée et d'évacuation du fluide, le conduit d'amenée débouchant dans une face en regard de laquelle est montée la membrane qui est susceptible d'isoler les conduits d'amenée et d'évacuation de fluide en obturant l'extrémité du conduit d'amenée de fluide qui forme un siège pour la membrane, est caractérisée en ce que la face de l'embase en regard de laquelle est montée la membrane comprend en combinaison :

- une surface extérieure en forme de couronne plane destinée à l'appui et à la fixation de la partie extérieure de la membrane, qui possède pour sa part une forme générale de disque,
- un évidement de forme générale conique s'étendant depuis la couronne plane vers l'intérieur de celle-ci, et au centre duquel débouche le conduit d'amenée de fluide, et
- un siège pour la membrane, constitué par une nervure entourant l'extrémité du conduit d'amenée de fluide, et faisant saillie du fond de l'évidement conique.

La couronne plane permet une fixation étanche de la membrane par sa partie périphérique en forme de couronne. Il est ainsi possible d'obtenir un contact métal sur métal avec une étanchéité qui répond parfaitement aux critères évoqués précédemment.

La forme conique qui descend sous le siège permet de parfaitement dégager ledit siège, de favoriser le coefficient de débit, lorsque la membrane est en position d'ouverture de la vanne, et de réduire au maximum le volume mort compte tenu de la forme que prend la membrane en position de fermeture. Du fait que le siège comporte une nervure, il est obtenu une excellente étanchéité lors de la fermeture par appui de la membrane contre cette nervure.

Avantageusement, la nervure formant siège pour la membrane possède un profil arrondi, présentant une section sensiblement semi-circulaire.

Cette forme de la nervure a la particularité de réduire au maximum l'effet d'"'emporte-pièce" vis-à-vis de la membrane. Elle permet, au contraire, grâce au profil arrondi laissé sur la partie en contact, de supporter une certaine déformation de la membrane sous l'effet de la pression du dispositif d'actionnement de celle-ci. Il est possible de considérer que le siège se comporte comme une partie de rotule face à une cupule, dont le plan de joint est mobile.

Selon une autre caractéristique de l'invention, l'épaisseur de la nervure est inférieure à la profondeur de l'évidement conique.

Avantageusement, le tronçon du conduit d'évacuation de fluide débouchant dans l'évidement conique forme un angle avec l'axe de la vanne, l'axe de ce tronçon de conduit étant incliné de l'intérieur vers l'extérieur et depuis l'évidement conique vers le fond de l'embase.

Cette disposition oblique du conduit d'évacuation favorise le coefficient de débit, facilite l'usinage, et réduit le volume mort au niveau de ce conduit.

Conformément à une autre caractéristique de l'invention, la partie en forme de couronne plane servant à l'appui de la membrane est entourée par un rebord périphérique tubulaire.

Le rebord périphérique assure un auto-centrage de la membrane lors de la mise en place de celle-ci. En outre, dans la mesure où la membrane est soudée sur l'embase, par une soudure orbitale, ce rebord périphérique protège la membrane tout en permettant sa soudure, en évitant le phénomène connu sous le terme de pointe de feu.

Selon une autre caractéristique de l'invention, particulièrement avantageuse dans le cas où la membrane est fixée sur l'embase par soudage, la partie en forme de couronne plane est décalée axialement vers l'extérieur, vis-à-vis du bord périphérique de l'évidement conique.

Dans ce cas, il n'existe pas de zones mortes susceptibles de former des zones de rétention du fluide, puisque le soudage de la membrane est réalisé sur la totalité de la largeur de la partie en forme de couronne, et que celle-ci est située sensiblement au-dessus du bord délimitant l'évidement conique.

Avantageusement, la face au contact de laquelle est montée la membrane est disposée en bout d'une partie cylindrique filetée extérieurement et servant au vissage d'une bague comportant un retour annulaire au-dessus de la membrane. Selon une possibilité, la bague comporte un filetage extérieur servant au montage du dispositif d'actionnement de la membrane.

Dans la mesure où la membrane es fixée par soudage, cette bague sert seulement au montage du dispositif d'actionnement de la membrane. Au contraire, lorsque la membrane est fixée mécaniquement sur l'embase, entre la membrane et le retour annulaire de la bague, est interposée une rondelle comportant un épaulement annulaire destinée à venir plaquer le bord de la membrane contre la partie de l'embase en forme de couronne plane.

De toute façon, l'invention sera bien comprise à l'aide de la description qui suit, en référence au dessin schématique annexé représentant, à titre d'exemple non limitatif, plusieurs formes d'exécution de cette vanne :

Figure 1 est une vue en coupe longitudinale d'une première vanne ;
Figure 2 est une vue en perspective de la membrane de la vanne de figure 1 ;
Figures 3 et 4 sont deux vues en coupe longitudinale de la membrane de figure 2 montée sur une embase de vanne, respectivement en position d'ouverture et en position de fermeture ;
Figure 5 est une vue en coupe longitudinale d'une autre vanne ;
Figure 6 est une vue en perspective de l'embase de la vanne de figure 5 ;
Figure 7 est une vue en coupe longitudinale d'une embase dans laquelle la fixation de la membrane est réalisée par serrage ;

Figure 8 est une vue en demi-coupe longitudinale d'une embase dans laquelle la fixation de la membrane est réalisée par soudage ;

Figure 9 est une vue de dessus d'une variante d'exécution de cette embase.

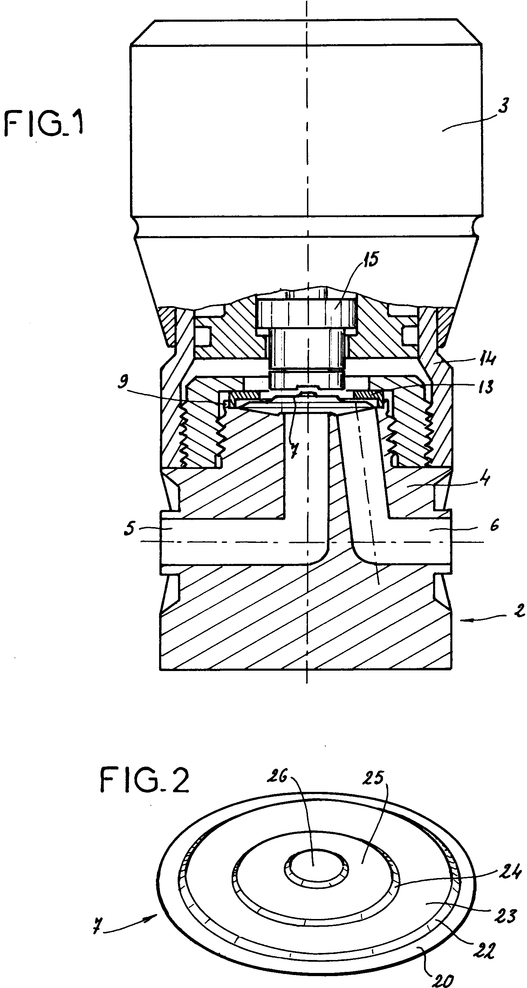

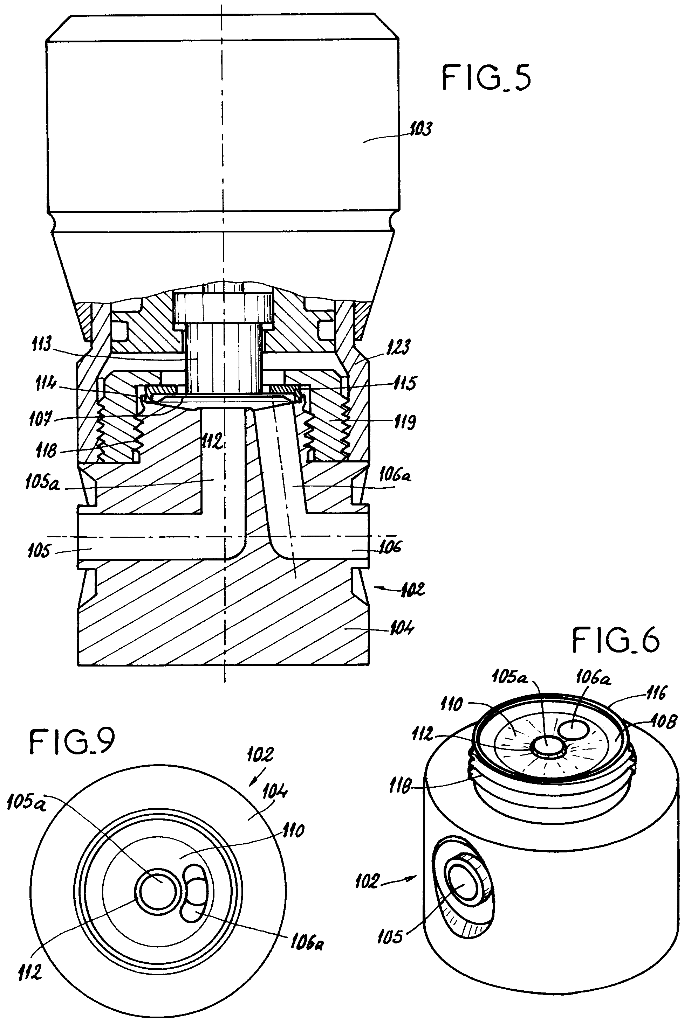

La vanne représentée à la figure 1 comporte une embase 2 surmontée par un bouton de manoeuvre 3. L'embase 2 comporte un corps 4 dans lequel sont ménagés un conduit 5 d'amenée de fluide et un conduit 6 d'évacuation du fluide, débouchant dans une face du corps 4, en regard de laquelle est montée une membrane métallique 7. La face de l'embase sur laquelle vient prendre appui la membrane métallique comporte une surface extérieure 8 en forme de couronne plane, entourée par un rebord périphérique tubulaire 9. Dans la forme d'exécution représentée au dessin, la face du corps de l'embase dans laquelle débouchent les conduits 5 et 6 présente un évidement conique 10 au centre duquel débouche le conduit 5 qui est entouré par une nervure arrondie 12 formant siège pour la membrane. Cet agencement de l'embase est donné à titre d'exemple non limitatif, étant précisé que l'évidement 10 pourrait ne pas exister ou le siège 12 pourrait être réalisé différemment.

Sur le corps de l'embase est vissée une bague 13, sur laquelle est monté le corps 14 du dispositif d'actionnement de la vanne dont le piston 15 est représenté au dessin. Cette bague 13 prend également appui sur une rondelle 16 comportant un épaulement 17 destiné à assurer la fixation de la membrane sur la couronne plane 8 de l'embase, et un retour 18 prenant appui sur une partie de la face extérieure de la membrane. Cette rondelle 16, de même que la bague 13, possède une ouverture centrale pour le passage du piston 15 du dispositif d'actionnement de la membrane.

La membrane comprend de l'extérieur vers l'intérieur, une zone de fixation 20 en forme de collerette destinée à venir prendre appui contre la couronne 8 de l'embase, une surface tronconique 22, une surface annulaire 23 parallèle au plan d'appui de la membrane sur l'embase, venant au contact, en position de repos avec la rondelle 16, une surface inclinée 24, qui est courbe, et dont la surface concave est tournée vers l'extérieur, et une partie centrale 25 formant obturateur proprement dit et sur laquelle agit le piston 15.

Cette partie centrale 25 comporte une excroissance 26 en son centre, tournée vers l'extérieur et obtenue par emboutissage. Cette excroissance rigidifie la partie centrale.

Pour sa part, le piston 15 comporte une extrémité 27 réalisée par exemple en une matière synthétique très dure, comportant un évidement central 28 permettant le logement de l'excroissance 26, ainsi qu'une gorge annulaire 29 ménagée dans un plan parallèle au plan contenant la face d'appui sur la membrane. Cette gorge 29 délimite au centre de l'extrémité 27 du piston une épaisseur de matière de diamètre inférieur à celui du siège 12.

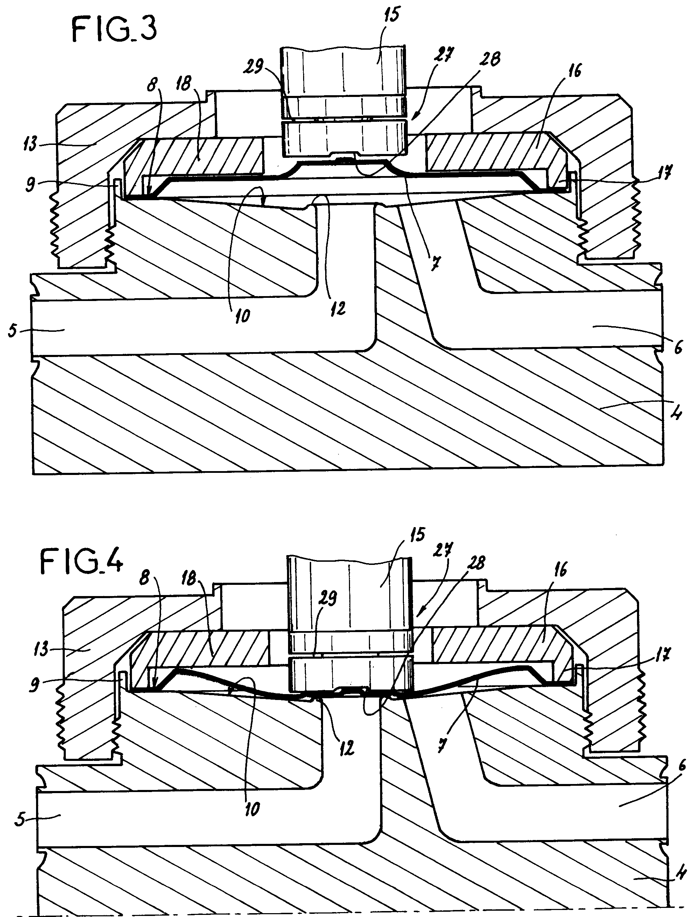

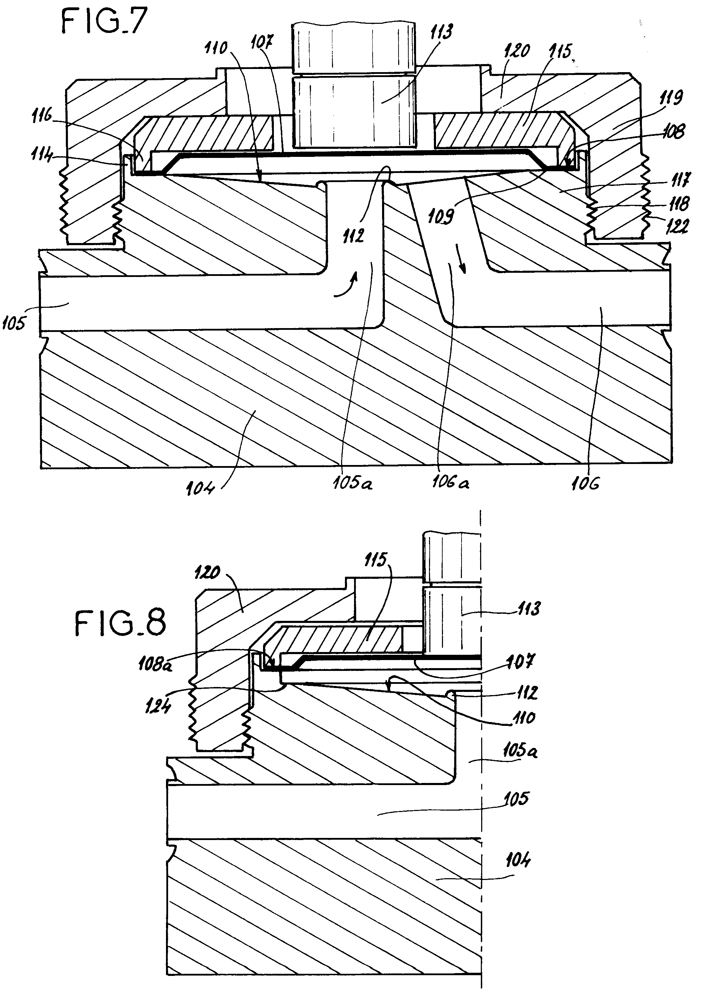

Les figures 3 et 4 représentent une vanne équipée de cette membrane. A la figure 3, la vanne est en position d'ouverture, ce qui montre parfaitement le large passage offert au fluide, ainsi que la faiblesse des zones d'interstice. La figure 4 représente la vanne en position fermée. Comme cela ressort de cette figure, la surface inclinée 22 agit comme un arc-boutant, et permet, dans une légère flexion, la déformation de toute la zone constituée par les surfaces 23 et 24, ainsi que le rappel de celles-ci en position haute lors de la remontée du piston. Il est également intéressant de noter qu'en position de fermeture de la vanne, les zones mortes sont extrêmement limitées.

La vanne représentée à la figure 5 comprend une embase 102, surmontée par un bouton de manoeuvre 103. Cette embase 102 comprend un corps 104 dans lequel sont ménagés des conduits 105 et 106, respectivement d'amenée et d'évacuation du fluide. Les tronçons 105a et 106a des conduits 105 et 106 débouchent dans une même face de l'embase, en regard de laquelle est montée une membrane métallique 107 qui est susceptible d'isoler les conduits 105 et 106, en obturant ou non l'extrémité du conduit 105a d'amenée de fluide qui forme un siège.

La face de l'embase 102 en regard de laquelle est montée la membrane comprend une surface extérieure 108 en forme de couronne plane, destinée à l'appui et à la fixation de la partie extérieure 109 également en forme de couronne, de la membrane 107. Cette face de l'embase comprend également, à l'intérieur de la couronne 108, un évidement de forme générale conique 110, s'étendant depuis la couronne 108, jusqu'au centre de l'embase, où débouche le tronçon 105a du conduit 105 d'amenée du fluide. L'extrémité de ce tronçon 105a forme un siège pour la membrane, qui est constitué par une nervure 112 faisant saillie du fond de l'évidement conique 110. Cette nervure possède un profil arrondi présentant une section sensiblement semi-circulaire.

Selon une autre caractéristique de l'invention, l'épaisseur de la nervure 112 est inférieure à la profondeur de l'évidement conique 110. Toutefois, la nervure 112 est suffisamment proéminente par rapport au fond de l'évidement conique pour former un siège pour la membrane 107, lorsque celle-ci est déformée sous l'action d'un piston 113, actionnable par le bouton de manoeuvre 103. Il est à noter que la forme arrondie de la nervure, tout en permettant une excellente étanchéité, évite tout effet de cisaillement de la membrane qui pourrait être dommageable notamment quant à la durée de vie de celle-ci.

Comme montré notamment aux figures 5 et 7, le tronçon 106a du conduit d'évacuation 106, débouchant dans l'évidement conique 110 est oblique, l'opération d'usinage de ce tronçon étant facilitée compte tenu de la conicité de l'évidement 110. Cet agencement améliore le coefficient de débit du fluide, en position ouverte de la vanne, et réduit le volume mort de fluide tant au niveau de la chambre délimitée par la membrane, qu'à l'intérieur du tronçon 106a du conduit de sortie.

La partie 108 de l'embase en forme de couronne plane servant à l'appui de la membrane 109, est entourée par un rebord tubulaire 114. Ce rebord assure un auto-centrage de la membrane 107, ainsi qu'un auto-centrage d'une rondelle 115 destinée à assurer le serrage mécanique de la membrane. A cet effet, cette rondelle 115 présente un épaulement annulaire 116 destiné à venir prendre appui contre la partie 109 en forme de couronne de la membrane 107. L'ouverture centrale de la rondelle 115 laisse passage au piston 113 d'actionnement de la membrane.

La face de l'embase au contact de laquelle est montée la membrane est disposée en bout d'une partie cylindrique 117 comportant un filetage extérieure 118 servant à la fixation par vissage d'une bague 119 comportant un retour annulaire 120 au-dessus de la membrane et au-dessus de la rondelle 115, tout en ménageant un passage central pour le piston 113. Le retour annulaire 120 de la bague 119 prend appui sur la rondelle 115 pour assurer un serrage de la membrane sur l'embase.

La bague 119 comporte également un filetage extérieur 122 servant au montage du corps de l'actionneur 123 qui intègre, comme indiqué précédemment, un bouton de manoeuvre 103 et un piston 113.

Il est avantageux de noter que, en mettant en oeuvre la même structure, embase et bague, il est possible de réaliser le montage de la membrane 107, soit par un serrage mécanique, comme décrit en référence à la figure 7, soit par soudage. Dans la mesure où l'on réalise le soudage, le rebord 114 est avantageux car évitant, lors de l'attaque du soudage, tous risques de détérioration de la zone de contact entre la membrane 109 et la couronne plane 108 appartenant à l'embase.

Selon une forme avantageuse de réalisation, dans le cas où la membrane est fixée par soudage, la partie 108a en forme de couronne plane destinée à servir à l'appui de la membrane 107 est décalée axialement vers l'extérieur, comme montré à la figure 8, vis-à-vis du bord 124 de l'évidement conique 110. Dans ces conditions, la fixation par soudage orbital est réalisée sur toute la surface de contact entre la couronne 108a et la partie de la membrane en appui contre celle-ci, de telle sorte qu'il ne subsiste pas de zone d'interstice étroite dans laquelle risquerait de s'accumuler du fluide, de façon dommageable, notamment si ce fluide est corrosif. En effet, comme montré à la figure 8, le bord de la membrane 107 est largement dégagé du bord 124 délimitant l'évidement conique 110.

Dans la forme d'exécution représentée à la figure 9, l'extrémité du conduit 106a d'évacuation du fluide possède une forme oblongue incurvée selon une ligne circulaire centrée sur l'axe de l'embase. Depuis cette extrémité oblongue, le conduit 106a change progressivement de forme pour prendre une forme circulaire, tout en conservant sensiblement la même section de passage. Cette forme oblongue permet de réduire le diamètre extérieur de l'embase tout en conservant le même coefficient de débit.

## Revendications

1. Vanne à membrane métallique, se présentant sous la forme d'un disque, caractérisée en ce qu'elle comporte, à partir de sa périphérie, une collerette plane (20) destinée à prendre appui sur l'embase avec étanchéité, raccordée à la partie centrale (25) sur laquelle est destiné à agir un dispositif d'actionnement (15, 27) par plusieurs surfaces annulaires (22, 23, 24) étagées depuis le plan d'appui sur l'embase vers l'extérieur, ces surfaces annulaires étant successivement inclinées de l'extérieur vers le centre de la membrane, et de l'embase vers le dispositif d'actionnement (22, 24), et parallèles au plan d'appui de la membrane sur l'embase (23, 25), lorsqu'aucune action n'est exercée sur la membrane.

2. Vanne selon la revendication 1, caractérisée en ce qu'au repos et avant montage sur l'embase la collerette extérieure (20) de la membrane forme un angle relevé de quelques degrés par rapport au plan d'appui sur l'embase.

3. Vanne selon l'une quelconque des revendications 1 et 2, caractérisée en ce que la collerette extérieure (20) de la membrane est prolongée du côté de l'intérieur par une surface tronconique (22) elle-même prolongée par une surface (23) parallèle au plan d'appui sur l'embase, lorsque la membrane est au repos.

4. Vanne selon la revendication 3, caractérisée en ce que la surface (23) de la membrane, parallèle au plan d'appui sur l'embase est prolongée par une zone (24) inclinée du côté du dispositif d'actionnement, elle-même raccordée à la partie centrale (25) de la membrane.

5. Vanne selon la revendication 5, caractérisée en ce que la zone inclinée (24) de la membrane reliant la partie centrale (25) à la surface parallèle au plan d'appui de l'embase est cintrée et possède sa surface concave tournée du côté de l'extérieur de la membrane.

6. Vanne selon l'une quelconque des revendications 1 à 5, caractérisée en ce que la membrane comporte, en son centre, une excroissance (26) de faible diamètre par rapport au diamètre de la partie centrale qui est lui-même supérieur au diamètre du siège ménagé à l'extrémité du conduit à obturer, résultant d'une déformation de la membrane vers l'extérieur, tandis que le piston (27) du dispositif d'actionnement comporte un évidement complémentaire (28), destiné à recevoir cette excroissance, lorsque le piston est en contact avec la membrane.

7. Vanne selon la revendication 6, caractérisée en ce que le piston (27) de l'actionneur, de diamètre supérieur à celui du siège (12) vis-à-vis duquel l'étanchéité doit être réalisée, comporte dans un plan parallèle à celui contenant sa face d'appui sur la membrane, une gorge (29) périphérique délimitant au centre une épaisseur de matière de diamètre inférieur à celui du siège (12) de l'embase de la vanne vis-à-vis duquel l'étanchéité doit être réalisée.

8. Vanne selon l'une quelconque des revendications 1 à 7, caractérisée en ce que la face de l'embase (102) en regard de laquelle est montée la membrane (107) comprend en combinaison :
    - une surface extérieure en forme de couronne plane (108) destinée à l'appui et à la fixation de la partie extérieure (109) de la membrane (107) qui possède pour sa part une forme générale de disque,
    - un évidement (110) de forme générale conique s'étendant depuis la couronne plane (108) vers l'intérieur de celle-ci, et au centre duquel débouche le conduit d'amenée de fluide, et
    - un siège pour la membrane (107), constitué par une nervure (112) entourant l'extrémité du conduit d'amenée de fluide (105a), et faisant saillie du fond de l'évidement conique (110).

9. Vanne selon la revendication 8, caractérisée en ce que la nervure (112) formant siège pour la membrane possède un profil arrondi, présentant une section sensiblement semi-circulaire.

10. Vanne selon l'une quelconque des revendications 8 et 9, caractérisée en ce que l'épaisseur de la nervure (112) est inférieure à la profondeur de l'évidement conique (110).

11. Vanne selon l'une quelconque des revendications 8 à 10, caractérisée en ce que le tronçon (106a) du conduit d'évacuation de fluide débouchant dans l'évidement conique (110) forme un angle avec l'axe de la vanne, l'axe de ce tronçon de conduit (106a) étant incliné de l'intérieur vers l'extérieur et depuis l'évidement conique (110) vers le fond de l'embase.

12. Vanne selon l'une quelconque des revendications 8 à 11, caractérisée en ce que la partie (108) en forme de couronne plane servant à l'appui de la membrane est entourée par un rebord périphérique tubulaire (114).

13. Vanne selon l'une quelconque des revendications 8 à 12, caractérisée en ce que la partie (108a) en forme de couronne plane est décalée axialement vers l'extérieur, vis-à-vis du bord périphérique (124) de l'évidement conique (110).

14. Vanne selon l'une quelconque des revendications 1 à 13, caractérisée en ce que la face au contact de laquelle est montée la membrane est disposée en bout d'une partie cylindrique (117) filetée extérieurement et servant au vissage d'une bague (119) comportant un retour annulaire (120) au-dessus de la membrane (107).

15. Vanne pour la revendication 14, caractérisée en ce que la bague (119) comporte un filetage extérieur (122) servant au montage du dispositif (123) d'actionnement de la membrane.

16. Vanne selon la revendication 14, caractérisée en ce qu'entre la membrane (107) et le retour annulaire (120) de la bague, est interposée une rondelle (115) comportant un épaulement annulaire (116) destiné à venir plaquer le bord (109) de la membrane contre la partie de l'embase en forme de couronne plane (108).

17. Vanne selon l'une quelconque des revendications 8 à 16, caractérisée en ce que l'extrémité du conduit (106a) d'évacuation de fluide débouchant dans une face du siège possède une forme oblongue et arrondie, se modifiant de façon continue à l'intérieur de l'embase jusqu'à présenter une forme circulaire de section sensiblement identique.

FIG.1

FIG.2

FIG.5

103

113

123

114

115

107

119

118

112

105a

106a

105

106

102

104

FIG.9

FIG.6

105a

106a

110

116

112

108

118

102

104

105a

110

102

112

106a

105

FIG.3

FIG.4

FIG.7

FIG.8

Office européen
des brevets

# RAPPORT DE RECHERCHE EUROPEENNE

Numero de la demande

EP 92 42 0192

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CH-A- 108 547 (BOILLAT)<br>* En entier *<br>--- | 1 | F 16 K 7/16 |
| A | US-A-2 812 777 (DAHL)<br>* Figure 7 *<br>--- | 1,8,10 | |
| Y | SU-A- 184 571 (MORDOVIN)<br>* En entier * | 8,10 | |
| A | | 1,11 | |
| | --- | | |
| Y | US-A-4 953 826 (OHMI)<br>* Colonne 3, ligne 54 - colonne 4, ligne 61 * | 8,10 | |
| A | <br>----- | 1,9 | |

DOMAINES TECHNIQUES RECHERCHES (Int. Cl.5)

F 16 K

Le présent rapport a été établi pour toutes les revendications

| Lieu de la recherche | Date d'achèvement de la recherche | Examinateur |
|---|---|---|
| LA HAYE | 03-09-1992 | VERELST P.E.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................
& : membre de la même famille, document correspondant

EPO FORM 1503 03.82 (P0402)